# EUROPEAN PATENT SPECIFICATION

(11) **EP 3 390 865 B1**
(45) Date of publication and mention of the grant of the patent: **16.12.2020**
(21) Application number: 16718224.5
(22) Date of filing: 07.04.2016
(51) Int. Cl.: F16H 57/04, F16H 61/00

(54) **HYBRID OIL PUMP**
HYBRIDÖLPUMPE
POMPE À HUILE HYBRIDE

(30) Priority: 14.12.2015 WO PCT/EP2015/079561
(43) Date of publication of application: 24.10.2018
(73) Proprietor: Pierburg Pump Technology GmbH, 41460 Neuss (DE)
(72) Inventor: PARISI, Marco, 80123 Napoli (IT); MALVASI, Alessandro, 57125 Livorno (IT); POPOV, Vladimir, 78048 Villingen-Schwenningen (DE)
(74) Representative: terpatent Patentanwälte ter Smitten Eberlein-Van Hoof Rütten Daubert
(86) International application number: PCT/EP2016/057557
(87) International publication number: WO 2017/102101

(56) References cited:
- WO-A1-2014/142016
- WO-A1-2015/099076
- JP-A- H08 324 262

## Description

The present invention refers to a hybrid oil pump for a vehicle comprising an engine for driving the vehicle, for example an internal combustion engine or an electrical engine.

A typical example for the use of a hybrid oil pump is to provide oil pressure even when the internal combustion engine is not running as for example is stopping for some seconds in a start/stop modus or is in a sailing modus. When the engine is stopped the pressurized oil is a.o. used for pre-lubrication of e.g. the bearings, for post-lubrication e.g. cooling and lubricating a turbine and for maintaining the oil pressure in other hydraulic devices, for example a hydraulic cam-phaser. Further, the pressurized oil is used for maintaining the oil pressure in the clutches of an automotive gearbox.

The hybrid oil pump comprises an oil pump unit for pumping pressurized oil to a vehicle component. The oil pump is provided with a mechanical drive for driving the oil pump unit in a mechanical driving mode, wherein the mechanical drive is mechanically connected to and driven by the engine. The oil pump is also provided with an electrical drive for driving the pump unit in an electrical driving mode when the engine is not rotating but the oil pump needs to be active.

WO 2014/142016 A1 discloses an arrangement comprising oil pump unitmechanically driven by an internal combustion engine, via a freewheel clutch and via an electric driving motor for driving the oil pump unit. WO2014142016A1 describes a hybrid oil pump comprising an oil pump unit, a mechanical drive for driving the oil pump unit in a mechanical driving mode, wherein the mechanical drive is mechanically connected to and driven by the engine, an electrical drive for driving the oil pump unit in an electrical driving mode, wherein the electrical drive comprises a motor with permanent magnets, which is directly mechanically connected to the pump unit, and a freewheel clutch, which automatically couples the mechanical drive with a pump shaft when the rotational speed of the mechanical drive is higher than the rotational speed of the synchronous reluctance motor.

The object of the present invention is to provide a hybrid oil pump having a simple construction and an improved efficiency.

This object is solved with a hybrid oil pump having the features of claim 1.

The hybrid oil pump is provided with an oil pump unit for pumping pressurized oil to a vehicle component. A vehicle component in the meaning of the present invention is e.g. the gearbox, the internal combustion engine, the steering unit or heat exchangers. The pump is provided with a mechanical drive for driving the pump unit in a mechanical driving mode and an electrical drive for driving the pump unit in an electrical driving mode. The mechanical drive is driven by the engine. This engine is preferably the internal combustion engine. The electrical drive is a synchronous reluctance motor. The hybrid oil pump is provided with a freewheel clutch arranged between the mechanical drive and the electrical drive. The freewheel clutch according to the present invention is designed such that the mechanical drive is automatically coupled with a pump shaft of the pump unit when the rotational speed of the mechanical drive is higher than the rotational speed of the synchronous reluctance motor.

No permanent magnets are used in a synchronous reluctance motor so that no magnetic forces are generated when the stator coils of the motor are not energized. When the freewheel clutch couples the mechanical drive with the pump unit, the rotor of the synchronous reluctance motor is rotated by the mechanical drive. In this case, the stator coils of the synchronous reluctance motor are switched off so that no magnetic resistance torque is generated when the synchronous reluctance motor is dragged.

As the synchronous reluctance motor is dragged by the mechanical drive without generating magnetic losses a sophisticated clutch, e.g. a switchable disc-clutch for decoupling the electrical drive is not necessary. Instead a very simple and reliable freewheel clutch is used, so that the number of parts of the pump unit compared to a pump unit using a disc-clutch is decreased. Accordingly, the pump unit can be manufactured more economically. Furthermore, as a failure of a complex disc-clutch cannot occur the pump unit can be made more fail-safe.

According to a preferred embodiment of the present invention a motor shaft of the synchronous reluctance motor is provided co-rotating with the pump shaft. The motor shaft is directly mechanically and stiffly connected to the pump shaft. With this arrangement the motor rotor also rotates when the mechanical drive is driving the pump. This has the advantage that the hybrid oil pump has a compact design.

Preferably the mechanical drive comprises a pulley wheel, which is driven by a belt. According to an alternative embodiment the mechanical drive comprises, instead of the pulley wheel a sprocket wheel, which is driven by a chain which is driven by the engine. Compared to a pulley wheel, a sprocket wheel has the advantage that a slip between the chain and the sprocket is avoided.

A pulley arrangement is preferably provided, which comprises the freewheel clutch and the pulley wheel. That the freewheel clutch forms a hub of the pulley wheel. The inner race of the freewheel clutch is mechanically connected to the pump shaft. As the freewheel clutch and the pulley wheel are provided as a single part no further axial space is needed to accommodate the freewheel clutch. Accordingly, the required space for the mechanical drive can be reduced.

Preferably a sprocket arrangement Is provided comprising the freewheel clutch and the sprocket wheel. The sprocket arrangement thereby is provided so that the freewheel clutch forms a hub of the sprocket wheel. The inner race of the freewheel clutch is mechanically connected to the pump shaft. As for the pulley arrangement also the sprocket arrangement has the advantage that space for the mechanical drive can be reduced. According to a preferred embodiment of the present invention the freewheel clutch comprises an outer race having at its inner circumferential surface sawtooth depressions. The freewheel clutch further comprises an inner race, which is provided within the outer race, so as to be rotatable in one rotational direction with respect to the outer race. The inner race comprises at least one, preferably four pawls, extending an outer circumferential surface thereof. The pawl thereby is provided such that the pawl interacts with the sawtooth depressions so as to block one rotational direction of the inner race with respect to the outer race.

According to a further preferred embodiment the pawl is mechanically preloaded in a radial direction via a spring so that one end of the pawl is in a permanent contact with the sawtooth depressions so as to block one rotational direction of the inner race with respect to the outer race. As a spring preferably a spiral spring or a leaf spring is used. A leaf spring has the advantage that it can be easy and thus economically manufactured. In a further preferred embodiment the pawl itself can be made out of a resilient material.

The freewheel clutch with the arrangement of the pawls extending the inner race has additionally the advantage that it is fail-safe. In case of a failure of the springs preloading the free ends of the pawls in a radial direction the free ends will be forced in the direction to the sawtooth depressions by centrifugal force generated by rotation of the inner race. When the internal combustion engine restarts again, the rotational speed of the outer race becomes faster than the rotational speed of the inner race. As the free ends of the pawls are in contact with the sawtooth depressions due to the centrifugal force, the other rotational direction of the inner race relative to the outer race is blocked. Accordingly, the inner race co-rotates with the outer race. When the inner race co-rotates with the outer race the free ends of the pawls lock with the respective sawtooth depressions. By co-rotating the inner race with the outer race the free ends still will be forced in the direction to the sawtooth depressions by the centrifugal force generated by the co-rotation of the inner race. The coils of the electrical drive can be switched off.

The following is a detailed description of an embodiment of the invention with reference to the drawings, wherein:
Figure 1 shows a schematic drawing of a hybrid oil pump according to an embodiment of the present invention,
Figure 2 shows a cross section of a first embodiment of a freewheel clutch, and
Figure 3 shows a cross section of a second embodiment of a freewheel clutch.

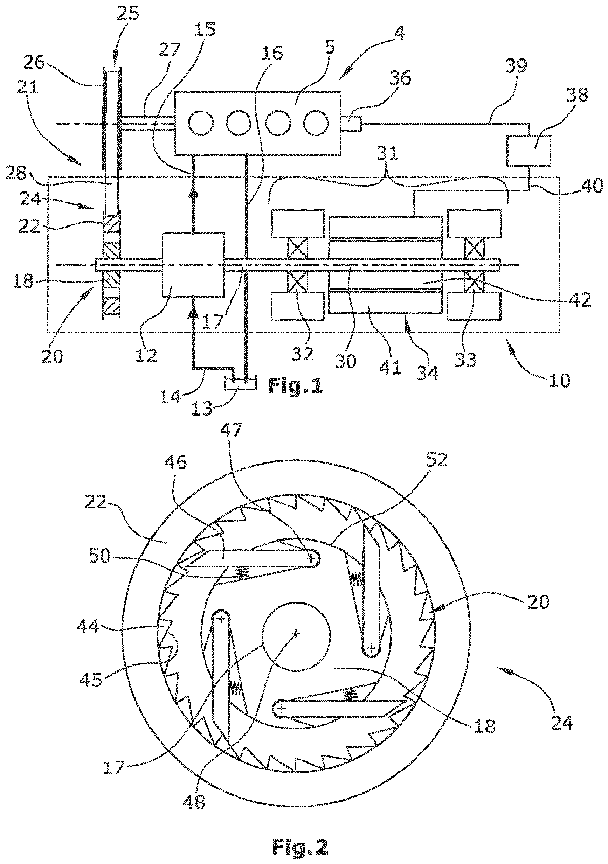

Figure 1 shows a schematic representation of an arrangement 4 comprising a vehicle driving engine 5 and a hybrid oil pump 10. According to the described embodiment the engine 5 is exemplarily an internal combustion engine. The hybrid oil pump 10 comprises an oil pump unit 12, which which pumps oil from an oil sink 13 to a vehicle component via an oil sink conduit 14 and an oil delivery conduit 15. The vehicle component according to the described embodiment is exemplarily the internal combustion engine 5. The oil from the internal combustion engine 5 is discharged to the oil sink 13 by an oil discharge conduit 16.

A pump rotor of the pump unit 12 is mechanically fixed to a pump shaft 17. One axial end of the pump shaft 17 is fixed to an inner race 18 of a freewheel clutch 20 of a driving arrangement 21. The freewheel clutch 20 further comprises an outer race 22, which is also defined by a pulley wheel 24. The inner race 18 is provided within the outer race 22, so as to be rotatable in one rotational direction relative to the outer race 22. In the other relative rotational direction of the inner race 18 with respect to the outer race 22 the outer race 22 blocks a relative rotation of the inner race 18 so that the inner race 18 co-rotates with the outer race 22.

The internal combustion engine 5 mechanically drives a mechanical drive 25. The mechanical drive 25 comprises the pulley wheel 24 and an engine driving wheel 26, which is driven by the internal combustion engine 5 via an engine shaft 27. The engine driving wheel 26 is mechanically connected to the pulley wheel 24, comprising the freewheel clutch 20, via a belt 28. The pump unit 12 therefore is mechanically connected and driven by the internal combustion engine 5.

The other axial end of the pump shaft 17 is mechanically connected to an end of a motor shaft 30 of an electrical drive 31 mechanically driving the pump unit 12. The electrical drive 31 comprises bearings 32, 33 supporting the motor shaft 30. The electrical drive 31 further comprises a reluctance motor 34, which is always mechanically directly connected to the axial end of the pump shaft 17.

When the internal combustion engine 5 is in a stop mode, the oil pump unit 12 is not further mechanically driven by the internal combustion engine 5. In this case, a temperature sensor 36 detects the temperature of the internal combustion engine 5 and forwards the temperature signal to an electronic control device 38 via an electric signal conduit 39. If the temperature exceeds a predetermined value, the electronic control device 38, which is also connected to the reluctance motor 34 via an electric conduit 40 starts the reluctance motor 34 by energizing magnetic coils 41. The reluctance motor 34 then drives the oil pump unit 12 so that pressurized oil is forwarded to the internal combustion engine 5 and the temperature of the internal combustion engine 5 is decreased. The inner race 18 then rotates with respect to the outer race 22 in a direction which is not blocked. When the internal combustion engine 5 restarts again, the rotational speed of the outer race 22 becomes faster than the rotational speed of the inner race 18. As the other rotational direction of the inner race 18 relative to the outer race 22 is blocked, the inner race 18 co-rotates with the outer race 22. If no combustion engine 5 cooling is needed or if the combustion engine 5 is running, the electronic control device 38 switches off the reluctance motor 34. A rotor 42 of the reluctance motor 34 therefore co-rotates with the pump shaft 17 without generating any magnetic losses.

Figure 2 shows a cross section of a first embodiment of a freewheel clutch 20 with the outer race 22 having sawtooth depressions 44 at its inner circumferential surface 45. In this embodiment of the present invention, the outer race 22 is mechanically fixed at the pulley wheel 24.

The inner race 18 is arranged within outer race 22. The inner race 18 thereby is rotatable provided in one direction with respect to the outer race 22. The inner race 18 comprises four pawls 46, which first ends are fixed at the inner race 18 so as to allow a rotation around a rotation axis 47 parallel to a rotation axis 48 of the inner race 18. The pawls 46 are preloaded by a spiral spring 50 in a radial outward direction so that the pawls 46 extend outwardly from an outer circumferential surface 52 of the inner race 18. The pawls 46 are preloaded such so as to be in permanent contact with the sawtooth depressions 44 of the outer race 22.

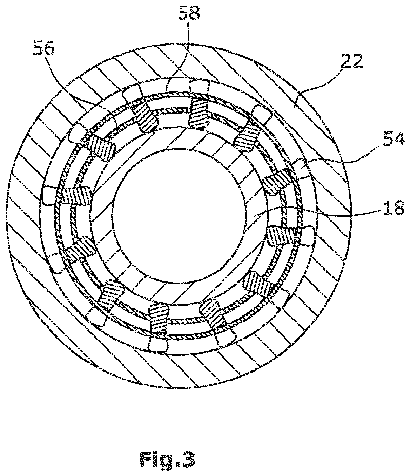

Figure 3 shows a cross section of a second embodiment of a freewheel clutch 20 providing a plurality of sprag portions 54 arranged between the inner race 18 and the outer race 22. The sprag portions 54 are tiltable provided in a cage 56 so as to allow a relative rotation of the inner race 18 with respect to the outer race 22 in one rotational direction and block the other rotational direction. A spring ring 58 pretensions the sprag portions 54 to a radial inner direction.

The present invention is not limited to the above described embodiment. In particular, instead of the internal combustion engine an electrical engine can be used to drive the mechanical drive. Further, instead of the internal combustion engine, the oil pump unit also can pump pressurized oil to vehicle components such as e.g. the transmission, the gearbox, the steering unit or heat exchangers.

### Reference signs

- 4: arrangement
- 5: engine
- 10: hybrid oil pump
- 12: pump unit
- 13: oil sink
- 14: oil sink conduit
- 15: oil delivery conduit
- 16: oil discharge conduit
- 17: pump shaft
- 18: inner race
- 20: freewheel clutch
- 21: driving arrangement
- 22: outer race
- 24: pulley wheel
- 25: mechanical drive
- 26: engine driving wheel
- 27: engine shaft
- 28: belt
- 30: motor shaft
- 31: electrical drive
- 32: bearing
- 33: bearing
- 34: reluctance motor
- 36: temperature sensor
- 38: electronic control device
- 39: electric conduit
- 40: electric conduit
- 41: magnetic coil
- 42: rotor
- 44: sawtooth depression
- 45: inner circumferential surface
- 46: pawl
- 47: rotation axis pawl
- 48: rotation axis
- 50: spiral spring
- 52: outer circumferential surface
- 54: sprag portions
- 56: cage
- 58: spring ring

## Claims

1. A hybrid oil pump (10) for a vehicle comprising an internal combustion engine (5), wherein the hybrid oil pump (10) comprises:
- an oil pump unit (12) for pumping pressurized oil to the internal combustion engine (5),
- a mechanical drive (25) for driving the oil pump unit (12) in a mechanical driving mode, wherein the mechanical drive (25) is mechanically connected to and driven by the engine (5),
- an electrical drive (31) for driving the oil pump unit (12) in an electrical driving mode, wherein the electrical drive (31) comprises a synchronous reluctance motor (34) without permanent magnets, which is directly mechanically connected to the pump unit (12) so that a rotor (42) of the reluctance motor (34) co-rotates with a pump shaft (17), and
- a freewheel clutch (20), which automatically couples the mechanical drive (25) with a pump shaft (17) when the rotational speed of the mechanical drive (25) is higher than the rotational speed of the synchronous reluctance motor (34), so that the rotor (42) of the synchronous reluctance motor (34) is rotated by the mechanical drive (25).

2. The hybrid oil pump (10) according to claim 1, wherein a motor shaft (30) of the synchronous reluctance motor (34) is provided co-rotating with the pump shaft (17).

3. The hybrid oil pump (10) according to claim 1 or 2, wherein the mechanical drive (25) comprises a sprocket wheel, which is driven by a chain.

4. The hybrid oil pump (10) according to one of the preceding claims, wherein a sprocket arrangement is provided comprising the freewheel clutch (20) and the sprocket wheel.

5. The hybrid oil pump (10) according to claim 1 or 2, wherein a driving arrangement (21) is provided comprising the freewheel clutch (20) and the pulley wheel (24).

6. The hybrid oil pump (10) according to claim 1, 2 or 5, wherein the mechanical drive (25) comprises a pulley wheel (24), which is driven by a belt (28).

## Patentansprüche

1. Hybridölpumpe (10) für ein Fahrzeug mit einem Verbrennungsmotor (5), wobei die Hybridölpumpe (10) aufweist:
- eine Ölpumpeneinheit (12) zum Pumpen von druckbeaufschlagtem Öl zu dem Verbrennungsmotor (5),
- einen mechanischen Antrieb (25) zum Antreiben der Ölpumpeneinheit (12) in einem mechanischen Antriebsmodus, wobei der mechanische Antrieb (25) mit dem Motor (5) mechanisch verbunden ist und von diesem angetrieben wird,
- einen elektrischen Antrieb (31) zum Antreiben der Ölpumpeneinheit (12) in einem elektrischen Antriebsmodus, wobei der elektrische Antrieb (31) einen synchronen Reluktanzmotor (34) ohne Permanentmagneten aufweist, der mechanisch direkt mit der Pumpeneinheit (12) derart verbunden ist, dass ein Rotor (42) des Reluktanzmotors (34) zusammen mit einer Pumpenwelle (17) dreht, und
- eine Freilaufkupplung (20), die den mechanischen Antrieb (25) automatisch mit einer Pumpenwelle (17) koppelt, wenn die Drehzahl des mechanischen Antriebs (25) höher ist als die Drehzahl des synchronen Reluktanzmotors (34), so dass der Rotor (42) des synchronen Reluktanzmotors (34) von dem mechanischen Antrieb (25) gedreht wird.

2. Hybridölpumpe (10) nach Anspruch 1, bei welcher eine Motorwelle (30) des synchronen Reluktanzmotors (34) vorgesehen ist, die sich zusammen mit der Pumpenwelle (17) dreht.

3. Hybridölpumpe (10) nach Anspruch 1 oder 2, bei welcher der mechanische Antrieb (25) ein Kettenrad aufweist, das von einer Kette angetrieben wird.

4. Hybridölpumpe (10) nach einem der vorhergehenden Ansprüche, bei welcher eine Kettenradanordnung vorgesehen ist, welche die Freilaufkupplung (20) und das Kettenrad aufweist.

5. Hybridölpumpe (10) nach Anspruch 1 oder 2, bei welcher eine Antriebsanordnung (21) vorgesehen ist, welche die Freilaufkupplung (20) und ein Riemenscheibenrad (24) aufweist.

6. Hybridölpumpe (10) nach Anspruch 1, 2 oder 5, bei welcher der mechanische Antrieb (25) ein Riemenscheibenrad (24) aufweist, welches von einem Riemen (28) angetrieben wird.

## Revendications

1. Pompe à huile hybride (10) pour un véhicule avec un moteur à combustion interne (5), dans laquelle la pompe à huile hybride (10) comprend:
- une unité de pompe à huile (12) pour pomper de l'huile sous pression vers le moteur à combustion interne (5),
- un entrainement mécanique (25) pour entrainer l'unité de pompe à huile (12) dans un mode d'entrainement mécanique, dans lequel l'entrainement mécanique (25) est relié mécaniquement au et entrainé par le moteur (5),
- un entrainement électrique (31) pour entrainer l'unité de pompe à huile (12) dans un mode d'entrainement électrique, dans lequel l'entrainement électrique (31) comprend un moteur à réluctance synchrone (34) sans aimants permanents, qui est directement relié mécaniquement à l'unité de pompe (12), de sorte qu'un rotor (42) du moteur à reluctance (34) tourne avec un arbre de pompe (17), et
- un embrayage à roue libre (20), qui couple automatiquement l'entrainement mécanique (25) avec un arbre de pompe (17) lorsque la vitesse de rotation de l'entrainement mécanique (25) est supérieure à la vitesse de rotation du moteur à réluctance synchrone (34), de sorte que le rotor (42) du moteur à réluctance synchrone (34) soit tourné par l'entrainement mécanique (25).

2. Pompe à huile hybride (10) selon la revendication 1, dans laquelle un arbre de moteur (30) du moteur à réluctance synchrone (34) est prévu en co-rotation avec l'arbre de pompe (17).

3. Pompe à huile hybride (10) selon la revendication 1 ou 2, dans laquelle l'entrainement mécanique (25) comprend un pignon qui est entrainé par une chaîne.

4. Pompe à huile hybride (10) selon l'une quelconque des revendications précédentes, dans laquelle un agencement de pignons est prévu comprenant l'embrayage à roue libre (20) et le pignon.

5. Pompe à huile hybride (10) selon la revendication 1 ou 2, dans laquelle un agencement d'entrainement (21) est prévu comprenant l'embrayage à roue libre (20) et une poulie (24).

6. Pompe à huile hybride (10) selon la revendication 1, 2 ou 5, dans laquelle l'entrainement mécanique (25) comprend une poulie (24) entrainée par une courroie (28).
